# EUROPÄISCHE PATENTSCHRIFT

(11) **EP 1 767 402 B1**
(45) Veröffentlichungstag und Bekanntmachung des Hinweises auf die Patenterteilung: **02.12.2009**
(21) Anmeldenummer: 06019219.2
(22) Anmeldetag: 14.09.2006
(51) Int. Cl.: B60Q 3/00, B60Q 3/04, B60K 35/00, B60K 37/02, G02F 1/13357

(54) **Anzeigevorrichtung**
Indicator device
Dispositif d'affichage

(30) Priorität: 24.09.2005 DE 102005045686
(43) Veröffentlichungstag der Anmeldung: 28.03.2007
(73) Patentinhaber: GM Global Technology Operations, Inc., Detroit, MI 48265-3000 (US)
(72) Erfinder: Brandt, Peter, 63739 Aschaffenburg (DE); Charle, Heiko, 65428 Rüsselsheim (DE)
(74) Vertreter: Daniel, Ulrich W.P.

(56) Entgegenhaltungen:
- EP-A- 1 519 218
- EP-A2- 0 818 701
- JP-A- 11 160 113
- US-A1- 2003 116 079

## Beschreibung

Die Erfindung betrifft eine Anzeigevorrichtung mit einer hintergrundbeleuchteten monochromen Anzeige und einem weiteren beleuchteten Feld.

Monochrome Anzeigen werden von einer Hintergrundbeleuchtung hinterleuchtet. Umfasst die Anzeigevorrichtung ein weiteres beleuchtetes Feld, so kann dieses beispielsweise als lichtemittierende Elektroluminenzfolie ausgeführt sein. Elektroluminenzfolien sind jedoch relativ teuer und haben eine relativ beschränkte Lebensdauer.

Die EP 0 818 701 A2 offenbart eine zweiseitige Anzeigevorrichtung mit einer LCD-Anzeige und mit einem Lichtleiter, der Licht einer Lichtquelle zur Forder- und Rückseite Der LCD-Anzeige leitet.

Die Aufgabe der vorliegenden Erfindung ist es daher, Voraussetzungen für eine kostengünstige Anzeigevorrichtung mit einer hintergrundbeleuchteten Anzeige und einem weiteren beleuchteten Feld anzugeben.

Die Aufgabe der Erfindung wird gelöst durch eine Anzeigenvorrichtung, aufweisend eine eine Anzeigeoberfläche, eine der Anzeigeoberfläche gegenüberliegende Rückseite und Seitenkanten aufweisende monochrome Anzeige, eine zum Hinterleuchten der Anzeige vorgesehene Hintergrundbeleuchtung, die einen an der Rückseite der Anzeige angeordneten, sich über wenigstens eine Seitenkante der Anzeige erstreckenden und die Anzeigeoberfläche der Anzeige teilweise überdeckenden Lichtleiter und in den Lichtleiter Licht einkoppelnde Leuchtmittel aufweist, und ein auf dem sich über die Anzeigeoberfläche der Anzeige erstreckenden Teil des Lichtleiters angeordnetes Feld, das durch diesen Teil des Lichtleiters hinterleuchtet wird. Somit wird der Lichtleiter der Hintergrundbeleuchtung nicht nur zum Hinterleuchten der Anzeige, sondern auch zum Hinterleuchten des Feldes genutzt. Dadurch ist es möglich, die erfindungsgemäße Anzeigevorrichtung mit relativ wenigen Bauteilen herzustellen, was sich positiv auf die Herstellungskosten auswirken kann. Des Weiteren erstreckt sich ein Teil des Lichtleiters um wenigstens einer Seitenkante der Anzeige und über einen Teil der Anzeigeoberfläche. Auf diesem Teilbereich des Lichtleiters ist das zu hinterleuchtende Feld angeordnet. Durch diese Ausführungsform ist eine Vorraussetzung für einen relativ kompakten Aufbau der Anzeigevorrichtung geschaffen.

Wenn gemäß einer Ausführungsform der erfindungsgemäßen Anzeigevorrichtung diese ein Gehäuse aufweist, an dem die Leuchtmittel der Hintergrundbeleuchtung angeordnet sind und der Lichtleiter befestigt ist, so werden weitere Vorraussetzungen für einen möglichst kompakten Aufbau der Anzeigevorrichtung geschaffen. Auch erlaubt diese Ausführungsform eine relativ schnelle und somit kostengünstige Montage der erfindungsgemäßen Anzeigevorrichtung.

Um die Anzeige der erfindungsgemäßen Anzeigevorrichtung und das Feld möglichst homogen zu hinterleuchten, umfasst das Gehäuse nach einer Variante einen Lichtreflektor.

Gemäß Ausführungsformen der erfindungsgemäßen Anzeigevorrichtung erstreckt sich der Lichtleiter über alle Seitenkanten der Anzeige und überdeckt die Anzeigeoberfläche im Bereich dieser Seitenkanten. Der die Anzeigeoberfläche teilweise überdeckende Teil des Lichtleiters ist bevorzugt ringförmig ausgebildet, um beispielsweise als Zifferblatt zum Beispiel einer Geschwindigkeitsanzeige eines Kraftfahrzeuges verwendet werden zu können.

Umfasst der Lichtleiter einen Schlitz, durch den die Anzeige in den Lichtleiter steckbar ist, wie dies gemäß einer bevorzugten Ausführungsform der erfindungsgemäßen Anzeigevorrichtung vorgesehen ist, so ist die Montage der erfindungsgemäßen Anzeigevorrichtung besonders einfach.

Ist der Lichtleiter gemäß einer erfindungsgemäßen Anzeigevorrichtung einteilig ausgeführt, so kann die Einstellung der Lichtintensität der Hintergrundbeleuchtung für die Anzeige gleichzeitig mit der Hinterleuchtung des Feldes eingestellt werden. Diese Variante erlaubt u.a. eine relativ einfache und schnelle Bedienung.

Umfasst der Lichtleiter einen an der Rückseite der Anzeige angeordneten ersten Teillichtleiter und einen sich über die Seitenkante und die Anzeigeoberfläche der Anzeigefläche teilweise überdeckenden zweiten Teillichtleiter, wie dies nach einer weiteren bevorzugten Ausführungsform der erfindungsgemäßen Anzeigevorrichtung vorgesehen ist, so kann die Intensität der Hinterleuchtung für die Anzeige und das Feld unabhängig voneinander eingestellt werden.

Wenn nach einer Ausführungsform der erfindungsgemäßen Anzeigevorrichtung die Teillichtleiter voneinander entkoppelt sind und die Leuchtmittel mit dem ersten Teillichtleiter gekoppelte erste Leuchtmittel und mit dem zweiten Teillichtleiter gekoppelte zweite Leuchtmittel sind, so ist es möglich, die Anzeige und das Feld mit unterschiedlichen Farben zu hinterleuchten. Ein Überleuchten der beiden Farben insbesondere im Grenzbereich der beiden Teillichtleiter wird durch die Entkopplung der beiden Teillichtleiter erreicht.

Relativ einfach kann diese Entkopplung nach einer bevorzugten Variante der erfindungsgemäßen Anzeigevorrichtung ausgeführt werden, wenn die beiden Teillichtleiter durch eine lichtabweisende und/oder lichtreflektierende dünne Schicht voneinander entkoppelt sind. Durch die dünne Schicht, die z.B. mittels Farbdruck auf eine der Grenzflächen, mit denen sich die beiden Teillichtleiter berühren, aufgetragen ist, kann ein Überleuchten der unterschiedlichen Farben insbesondere im Grenzbereich der beiden Teillichtleiter verhindert werden.

Ein Entkoppeln der beiden Teillichtleiter kann auch gemäß einer weiteren bevorzugten Variante der erfindungsgemäßen Anzeigevorrichtung erreicht werden, nach der das Gehäuse mit Trennwänden zum Entkoppeln der beiden Teilleiter versehen ist.

Um das hinterleuchtete Feld in mehrere verschiedenfarbig hinterleuchtete Zonen zu unterteilen, ist es nach einer weiteren Ausführungsform der erfindungsgemäßen Anzeigevorrichtung vorgesehen, den zweiten Teillichtleiter in mehrere voneinander entkoppelte Teilbereiche zu unterteilen, die jeweils mit verschiedenfarbigen Leuchtmitteln gekoppelt sind. Die voneinander entkoppelten Teilbereiche sind z.B. mittels dünner lichtreflektierender und/oder lichtabsorbierender Schichten voneinander entkoppelt. Eine solche dünne Schicht kann beispielsweise mittels Farbdruck auf wenigstens eine der Grenzflächen, mit denen sich zwei Teilbereiche berühren, realisiert werden.

Nach einer weiteren Ausführungsform der erfindungsgemäßen Anzeigevorrichtung ist zwischen dem Feld und dem Teil des Lichtleiters, der das Feld hinterleuchtet, ein Farbfilter angeordnet. Durch das Farbfilter ist es möglich, das Feld und die Anzeige mit unterschiedlichen Farben zu hinterleuchten, obwohl in den Leichtleiter ein im Wesentlichen homogenes Licht eingekoppelt wird. Wird beispielsweise eine Hintergrundbeleuchtung mit einem relativ breitbandigen Farbspektrum verwendet, so wird durch das Farbfilter die Anzeige und das Feld verschiedenfarbig hinterleuchtet. Das Farbfilter kann insbesondere auch Bereiche mit unterschiedlichen Filtercharakteristika haben. Dadurch ist es mit relativ einfachen Mitteln möglich, das Feld in verschiedenen Bereichen verschiedenfarblich zu hinterleuchten.

Wird als Anzeige ein Flüssigkristallbildschirm, wie dies nach einer Variante der erfindungsgemäßen Anzeigevorrichtung vorgesehen ist, verwendet, so kann die Anzeigevorrichtung relativ preisgünstig hergestellt werden.

Die Anzeigevorrichtung wird bevorzugt in einem Kraftfahrzeug verwendet, um z.B. den Fahrzeuglenker bzw. die Fahrzeuglenkerin über Fahrzeugparameter zu informieren.

Die erfindungsgemäße Anzeigevorrichtung bietet Voraussetzungen unter anderem für ein gleichmäßiges Ausleuchten des Feldes auch im Bereich des von der Anzeige abgedeckten Sichtbereiches des Feldes, eine gleichmäßige Ausleuchtung des Anzeigefeldes im Sichtbereich, eine mechanische Fixierung und Halterung des Display-Moduls am Gehäuse und die Möglichkeit der Farbumschaltung beim Farbdisplay, ohne Beeinflussung der Transmissionsfarbe des Feldes.

Ausführungsbeispiele der Erfindung werden exemplarisch in den schematischen Figuren dargestellt. Es zeigen:
- Fig. 1: einen Personenkraftwagen PKW,
- Fig. 2 bis 4: verschiedene Anzeigevorrichtungen,
- Fig. 5: einen Lichtleiter und
- Fig. 6: einen Teillichtleiter.

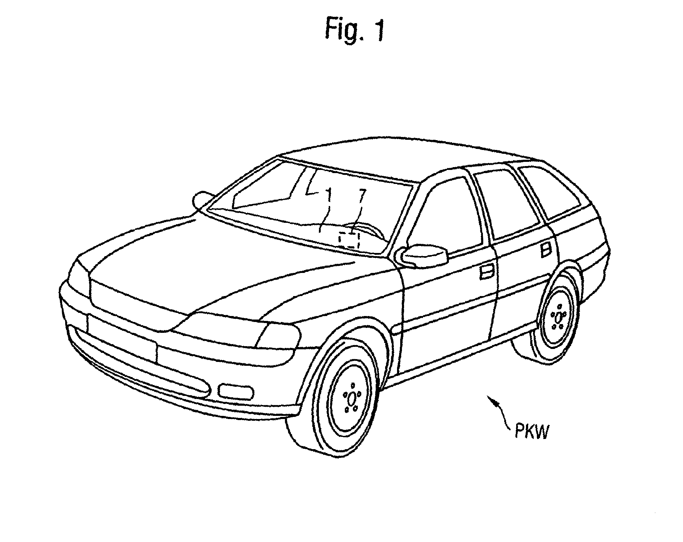

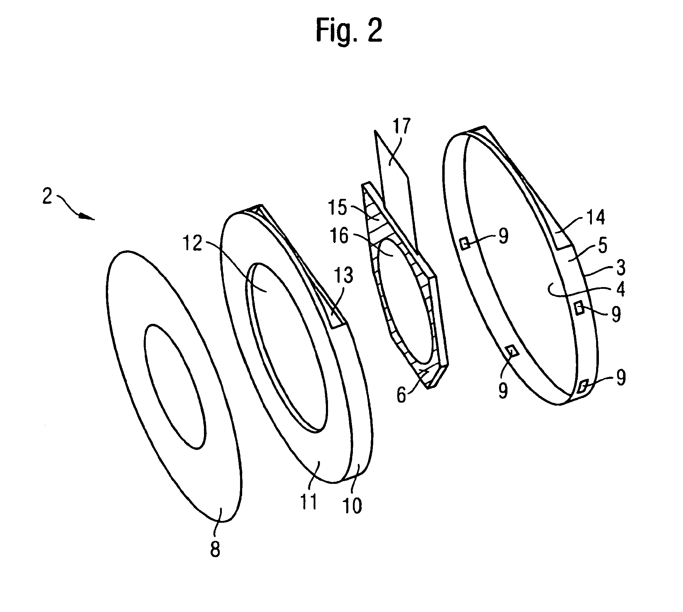

Die Fig. 1 zeigt einen Personenkraftwagen PKW mit einem Armaturenbrett 1, an dem eine in der Fig. 2 in Explosionsdarstellung gezeigte Anzeigevorrichtung 2 angeordnet ist. Die Anzeigevorrichtung 2 ist dafür vorgesehen, einen in den Figuren nicht gezeigten Fahrzeuglenker bzw. nicht gezeigte Fahrzeuglenkerin des Personenkraftwagens PKW über Fahrzeugparameter des Personenkraftwagens PKW zu informieren.

Die Anzeigevorrichtung 2 umfasst im Falle des vorliegenden Ausführungsbeispiels ein Gehäuse 3, das rückseitig mit einer Rückwand 4 und seitlich mit einer zylinderförmigen Seitenwand 5 begrenzt ist, einen Flüssigkristallbildschirm 6 als Anzeige, eine Hintergrundbeleuchtung zum Hinterleuchten des Flüssigkristallbildschirmes 6 und ein ringförmiges Zifferblatt 8. Die Hintergrundbeleuchtung weist im Falle des vorliegenden Ausführungsbeispieles an der Seitenwand 5 des Gehäuses 3 angeordnete und gelbes Licht emittierende gelbe Leuchtdioden 9 und einen scheiben- und zylinderförmig ausgeführten Lichtleiter 10 aus Plexiglas auf. Die gelben Leuchtdioden 9 sind derart am Gehäuse 3 angeordnet, sodass sie im montierten Zustand der Anzeigevorrichtung 2 gelbes Licht seitlich in den Lichtleiter 10 einkoppeln. Ferner ist im Falle des vorliegenden Ausführungsbeispiels die in das Innere des Gehäuses 3 gerichteten Flächen der Rückwand 4 und der Seitenwand 5 mit einer lichtreflektierenden Schicht überzogen.

Im Falle des vorliegenden Ausführungsbeispiels weist der Lichtleiter 10 einen ringförmigen Teilbereich 11 auf, auf dem das Zifferblatt 8 im montierten Zustand befestigt ist. Innerhalb des ringförmigen Teilbereichs 11 des Lichtleiters 10 befindet sich konzentrisch zu diesem und relativ zur Fläche, auf der das Zifferblatt 8 im montierten Zustand der Anzeigevorrichtung 2 befestigt ist, ein zurückgesetzter Teilbereich 12. Der Teilbereich 12 liegt im montierten Zustand der Anzeigevorrichtung 2 an der Rückseite des Flüssigkristallbildschirmes 6 an.

Des Weiteren weist der Lichtleiter 10 einen seitlich an den Lichtleiter 10 angeordneten Schlitz 13 auf, der derart dimensioniert ist, dass durch diesen der Flüssigkristallbildschirm 6 in den Lichtleiter 10 gesteckt werden kann.

Für die Montage der Anzeigevorrichtung 2 wird zunächst der Lichtleiter 10 in das Gehäuse 3, an dem bereits die gelben Leuchtdioden 9 befestigt sind, derart von vorne befestigt, dass der Schlitz 13 des Lichtleiters 10 durch eine Öffnung 14 in der Seitenwand 5 des Gehäuses 3 zugänglich ist.

Anschließend wird der Flüssigkristallbildschirm 6 durch die Öffnung 14 des Gehäuses 3 und durch den Schlitz 13 des Lichtleiters 10 in den Lichtleiter 10 hineingesteckt. Dabei ist der Lichtleiter 10 derart ausgeführt, dass der ringförmige Teilbereich 11 des Lichtleiters 10 einen Teil der Anzeigeoberfläche 15 des in den Lichtleiter 10 gestreckten Flüssigkristallbildschirmes 6 überdeckt und dadurch im Falle des vorliegenden Ausführungsbeispiels ein kreisförmiger Ausschnitt 16 der Anzeigeoberfläche 15 des Flüssigkristallbildschirmes 6 von dem Lichtleiter 10 nicht überdeckt und somit von vorne direkt sichtbar ist. Außerdem berührt der zurückgesetzte Teilbereich 12 des Lichtleiters 10 die Rückseite des Flüssigkristallbildschirmes 6 im montierten Zustand der Anzeigevorrichtung 2.

Danach wird das Zifferblatt 8, das im Falle des vorliegenden Ausführungsbeispieles Teil eines Geschwindigkeitsmessers des Personenkraftwagens PKW ist, auf den ringförmigen Teilbereich 11 des Lichtleiters 10 befestigt. Anschließend wird die fertig montierte Anzeigevorrichtung in das Armaturenbrett 1 des Personenkraftwagen PKW in nicht dargestellter Weise befestigt.

Im eingebauten Zustand ist die Anzeigevorrichtung 2 mit einem Steuergerät 7 des Personenkraftwagens PKW in nicht dargestellter Weise elektrisch verbunden. Das Steuergerät 7 steuert im Falle des vorliegenden Ausführungsbeispieles die gelben Leuchtdioden 9 und den Flüssigkristallbildschirm 6 über Kontakte 17 des Flüssigkristallbildschirms 6 in für den Fachmann bekannter Weise an. Im Betrieb der Anzeigevorrichtung 2 leuchten die gelben Leuchtdioden 9 mit einem gelben Licht, das in den Lichtleiter 10 eingekoppelt wird. Die reflektierende Schicht des Gehäuses 3 unterstützt im Falle des vorliegenden Ausführungsbeispiels eine homogenen Lichtverteilung im Lichtleiter 10. Dadurch wird der Flüssigkristallbildschirm 6 vom zurückgesetzten Teilbereich 12 und das Zifferblatt 8, das zumindest teilweise lichtdurchlässig ist, vom ringförmigen Teilbereich 11 des Lichtleiters 10 mit gelben Licht hinterleuchtet.

Im Falle des vorliegenden Ausführungsbeispieles ist das Steuerungsgerät 7 ferner derart ausgeführt, dass die Lichtintensität der gelben Leuchtdioden 9 einstellbar ist. Dadurch ist es möglich, den Flüssigkristallbildschirm 6 zusammen mit dem Zifferblatt 8 unterschiedlich stark zu hinterleuchten.

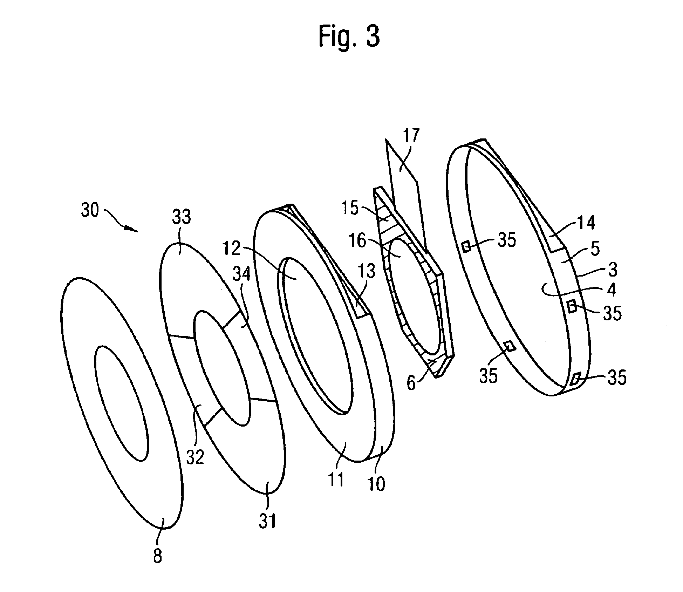

Die Fig. 3 zeigt ein weiteres Ausführungsbeispiel einer Anzeigevorrichtung 30, die anstelle der in der Fig. 2 gezeigten Anzeigevorrichtung 2 in den Personenkraftwagen PKW eingebaut werden kann. Wenn folgend nicht anders beschrieben, sind Bestandteile der in der Fig. 3 gezeigten Anzeigevorrichtung 30, welche mit Bestandteilen der in der Fig. 2 gezeigten Anzeigevorrichtung 2 weitgehend bau- und funktionsgleich sind, mit denselben Bezugszeichen versehen.

Die in der Fig. 3 dargestellte Anzeigevorrichtung 30 unterscheidet sich im Wesentlichen von der in der Fig. 2 dargestellten Anzeigevorrichtung 2 dadurch, dass zwischen dem Zifferblatt 8 und dem ringförmigen Teilbereich 11 des Lichtleiters 10 ein ringförmiges Farbfilter 31 angeordnet ist.

Das Farbfilter 31 umfasst im Falle des vorliegenden Ausführungsbeispieles drei Teilbereiche 32, 33 und 34, die jeweils unterschiedliche Filtercharakteristika haben. Des Weiteren unterscheidet sich die Anzeigevorrichtung 30 von der in der Fig. 2 dargestellte Anzeigevorrichtung 2 dadurch, dass anstelle der gelben Leuchtdioden 9 Leuchtdioden 35 mit einem ein relativ breitbandiges Farbspektrum abgebendes Licht verwendet werden. Die Filtercharakteristika der Teilbereiche 32, 33 und 34 des Farbfilters 31 sind im Falle des vorliegenden Ausführungsbeispieles derart ausgeführt, dass sie im Wesentlichen jeweils nur ein Licht einer bestimmten Farbe durchlassen. Dadurch ist es möglich, das Zifferblatt 8 nicht nur mit einer von der Hintergrundbeleuchtung des Flüssigkristallbildschirmes 6 verschiedenen Farben zu hinterleuchten, sondern auch unterschiedliche Teilbereiche 32, 33, 34 des Zifferblatts 8 verschiedenfarbig zu hinterleuchten. Alternativ oder zusätzlich kann auch zwischen der Rückseite des Flüssigkristallbildschirmes 6 und dem zum Hinterleuchten des Flüssigkristallbildschirmes 6 vorgesehenen Teilbereich 12 des Lichtleiters 10 ein Farbfilter angeordnet sein, das auch unterschiedliche Bereiche mit unterschiedlichen Filtercharakteristika haben kann.

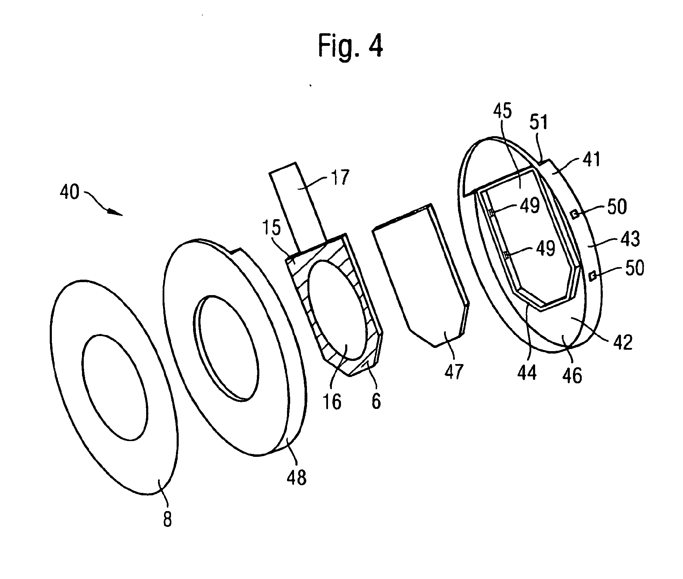

Die Fig. 4 zeigt ein weiteres Ausführungsbeispiel einer Anzeigevorrichtung 40, die anstelle der in der Fig. 2 gezeigten Anzeigevorrichtung 2 in den Personenkraftwagen PKW eingebaut werden kann. Wenn folgend nicht anders beschrieben, sind Bestandteile der in den Fig. 4 gezeigten Anzeigevorrichtung 40, welche mit Bestandteilen der in der Fig. 2 gezeigten Anzeigevorrichtung 2 weitgehend bau- und funktionsgleich sind, mit denselben Bezugszeichen versehen.

Die in der Fig. 4 gezeigten Anzeigevorrichtung 40 unterscheidet sich im Wesentlichen von der in den Fig. 2 gezeigten Anzeigevorrichtung 2 durch ihr Gehäuse 41 und der Hintergrundbeleuchtung.

Im Falle des vorliegenden Ausführungsbeispiels umfasst das Gehäuse 41 der Anzeigevorrichtung 40 ähnlich dem Gehäuse 3 der in der Fig. 2 gezeigten Anzeigevorrichtung 2 eine Rückwand 42 und eine ringförmige Seitenwand 43. Im Gegensatz zum Gehäuse 3 der in der Fig. 2 gezeigten Anzeigevorrichtung 2 sind an der Rückwand 42 des Gehäuses 41 Trennwände 44 angeordnet, die das Gehäuse 41 in einen ersten Teilbereich 45 und in einen zweiten Teilbereich 46 unterteilen.

Ferner umfasst der Lichtleiter der Anzeigevorrichtung 40 einen flächenhaften Teillichtleiter 47 und einen ringförmigen Teillichtleiter 48. Der flächenhafte Teillichtleiter 47 ist derart dimensioniert, sodass er im montierten Zustand der Anzeigevorrichtung 40 in den durch die Trennwände 44 abgegrenzten ersten Teilbereich 45 passt. Im Falle des vorliegenden Ausführungsbeispiels sind die Trennwände 44 genauso hoch wie die Dicke des flächenhaften Teillichtleiters 47. In den Trennwänden 44 sind ferner gelbe Leuchtdioden 49 derart angeordnet, sodass diese seitlich in den flächenhaften Teillichtleiter 47 gelbes Licht einkoppeln.

Nachdem der flächenhafte Teillichtleiter 47 an das Gehäuse 41 befestigt wurde, wird für die Montage der Anzeigevorrichtung 40 der ringförmige Teillichtleiter 48 an den zweiten Teilbereich 46 des Gehäuses 41 befestigt. Im Falle des vorliegenden Ausführungsbeispiels sind an der Seitenwand 43 rote Leuchtdiode 50 derart angeordnet, sodass sie rotes Licht in den ringförmigen Teillichtleiter 48 einkoppeln. Durch die Trennwände 44 sind die beiden Teillichtleiter 47 und 48 entkoppelt.

Anschließend wird durch eine Öffnung 51 in der Seitenwand 43 des Gehäuses 3 der Flüssigkristallbildschirm 6 derart zwischen den flächenhaften Teillichtleiter 47 und den ringförmigen Teillichtleiter 48 geschoben, sodass der flächenhafte Teillichteleiter 47 an der Rückseite des Flüssigkristallbildschirmes 6 anliegt und der ringförmige Teillichtleiter 48 die Anzeigeoberfläche 15 des Flüssigkristallbildschirmes 6 teilweise überdeckt.

Anschließend wird im Falle des vorliegenden Ausführungsbeispiels das Zifferblatt 8 auf den ringförmigen Teillichtleiter 48 befestigt.

Im Betrieb der Anzeigevorrichtung 40 koppelten somit die gelben Leuchtdioden 49 gelbes Licht in den flächenhaften Teillichtleiter 47, der dadurch den Flüssigkristallbildschirm 6 gelb hinterleuchtet. Die roten Leuchtdioden 50 koppeln rotes Licht in den ringförmigen Teillichtleiter 49, der dadurch das Zifferblatt 8 rot hinterleuchtet.

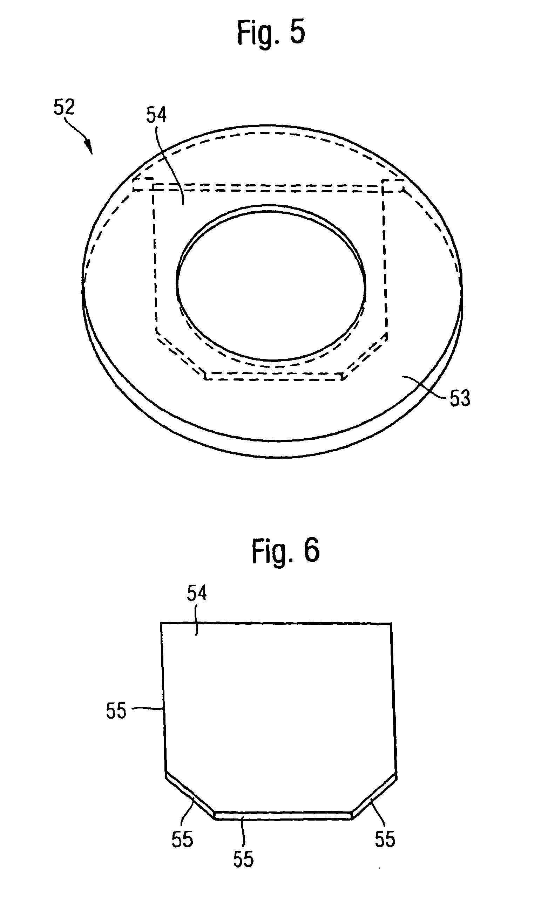

Die Entkopplung des flächenhaften Teillichtleiters 47 vom ringförmigen Teillichtleiter 48 muss nicht notwendigerweise durch die Trennwände 44 des Gehäuses 41 erfolgen. Es ist insbesondere auch möglich, dass die beiden Teillichtleiter dicht aneinander anliegen und an ihren Grenzflächen mit einer dünnen lichtundurchlässigen und/oder lichtreflektierenden Schicht versehen sind. Ein solches Ausführungsbeispiel ist in der Fig. 5 gezeigt.

Der in der Fig. 5 gezeigte Lichtleiter 52 umfasst einen ringförmigen Teillichtleiter 53, der ähnlich dem ringsförmigen Teillichtleiter 48 der Anzeigevorrichtung 30 ausgebildet ist. An den ringförmigen Teillichtleiter 53 ist ein flächenhafter Teillichtleiter 54, der in der Fig. 6 näher gezeigt ist, angefügt. Der flächenhafte Teillichtleiter 54 ähnelt dem flächenhaften Teillichtleiter 47 der Anzeigevorrichtung 30.

Im Falle des vorliegenden Ausführungsbeispiels sind die Seitenkanten 55 des flächenhaften Teillichtleiters 54 mit einem lichtundurchlässigen Lack versehen. Dadurch ist es möglich, in den flächenhaften Teillichtleiters 54 und in den ringförmigen Teillichtleiter 53 Licht unterschiedlicher Farbe einzukoppeln, ohne dass sich die Farben insbesondere im Grenzbereich zwischen den beiden Teillichtleitern 53 und 54 überlagern.

Obwohl die vorliegende Erfindung anhand eines bevorzugten Ausführungsbeispieles beschrieben wurde, ist die Erfindung nicht auf diese beschränkt, sondern auf vielfältige Weise modifizierbar. Insbesondere sind die gewählten Farben der Leuchtdioden 9, 49 und 50 nur exemplarisch.

### Bezugszeichenliste

- 1: Armaturenbrett
- 2: Anzeigevorrichtung
- 3: Gehäuse
- 4: Rückwand
- 5: Seitenwand
- 6: Flüssigkristallbildschirm
- 7: Steuergerät
- 8: Zifferblatt
- 9: gelbe Leuchtdioden
- 10: Lichtleiter
- 11, 12: Teilbereich
- 13: Schlitz
- 14: Öffnung
- 15: Anzeigeoberfläche
- 16: Ausschnitt
- 17: Kontakte
- 30: Anzeigevorrichtung
- 31: Farbfilter
- 32, 33, 34: Teilbereiche
- 35: Leuchtdioden
- 40: Anzeigevorrichtung
- 41: Gehäuse
- 42: Rückwand
- 43: Seitenwand
- 44: Trennwände
- 45, 46: Teilbereich
- 47: flächenhafter Teillichtleiter
- 48: ringförmigen Teillichtleiter
- 49: gelbe Leuchtdioden
- 50: rote Leuchtdiode
- 51: Öffnung
- 52: Anzeigevorrichtung
- 53: ringförmigen Teillichtleiter
- 54: flächenhafter Teillichtleiter
- 55: Seitenkanten
- PKW: Personenkraftwagen

## Patentansprüche

1. Anzeigevorrichtung, aufweisend eine eine Anzeigeoberfläche (15), eine der Anzeigeoberfläche (15) gegenüberliegende Rückseite und Seitenkanten aufweisende monochrome Anzeige (6), und eine zum Hinterleuchten der Anzeige (6) vorgesehene Hintergrundbeleuchtung, die einen an der Rückseite der Anzeige (6) angeordneten, sich über wenigstens eine der Seitenkanten der Anzeige (6) erstreckenden und die Anzeigeoberfläche (15) der Anzeige (6) teilweise überdeckenden Lichtleiter (10, 52) und in den Lichtleiter (10, 52) Licht einkoppelnde Leuchtmittel (9, 35, 49, 50) aufweist,
**gekennzeichnet durch**
ein auf dem sich über die Anzeigeoberfläche (15) der Anzeige (6) erstreckenden Teil des Lichtleiters (11, 48, 53) angeordnetes Feld (8), das **durch** diesen Teil des Lichtleiters (11, 48, 53) hinterleuchtet wird.

2. Anzeigenvorrichtung nach Anspruch 1, die ein Gehäuse (3, 41) aufweist, an dem die Leuchtmittel (9, 35, 49, 50) angeordnet sind und an dem der Lichtleiter (10, 52) befestigt ist.

3. Anzeigevorrichtung nach Anspruch 2, bei der das Gehäuse (3, 41) einen Lichtreflektor aufweist.

4. Anzeigevorrichtung nach einem der Ansprüche 1 bis 3, bei der sich der Lichtleiter (10, 52) über alle Seitenkanten der Anzeige (6) erstreckt und die Anzeigeoberfläche (15) im Bereich der Seitenkanten überdeckt.

5. Anzeigevorrichtung nach einem der Ansprüche 1 bis 4, bei der der die Anzeigoberfläche (15) teilweise überdeckende Teil des Lichtleiters (11, 48, 53) ringförmig ausgebildet ist.

6. Anzeigevorrichtung nach einem der Ansprüche 1 bis 5, bei der das Feld ein Zifferblatt (8) ist.

7. Anzeigevorrichtung nach einem der Ansprüche 1 bis 6, bei der der Lichtleiter (52) einen Schlitz (13) aufweist, durch den die Anzeige (6) in den Lichtleiter (10, 52) steckbar ist.

8. Anzeigevorrichtung nach einem der Ansprüche 1 bis 7, bei der der Lichtleiter (10) einteilig ist.

9. Anzeigevorrichtung nach einem der Ansprüche 1 bis 7, bei der der Lichtleiter (52) einen an der Rückseite der Anzeige (6) angeordneten ersten Teillichtleiter (47, 54) und einen sich über die Seitenkante und die Anzeigeoberfläche der Anzeige teilweise überdeckenden zweiten Teillichtleiter (48, 53) umfasst.

10. Anzeigevorrichtung nach Anspruch 9, bei der die beiden Teillichtleiter (47, 48, 53, 54) voneinander entkoppelt sind und die Leuchtmittel mit dem ersten Teillichtleiter (47, 54) gekoppelte erste Leuchtmittel und mit dem zweiten Teillichtleiter (48, 53) gekoppelte zweite Leuchtmittel umfassen.

11. Anzeigevorrichtung nach Anspruch 10, bei der die beiden Teillichtleiter (53, 54) durch eine lichtabweisende und/oder lichtreflektierende dünne Schicht voneinander entkoppelt sind.

12. Anzeigevorrichtung nach Anspruch 10, bei der das Gehäuse (41) Trennwände (44) zum Entkoppeln der beiden Teillichtleiter (47, 48) aufweist.

13. Anzeigevorrichtung nach einem der Ansprüche 10 bis 12, bei der der zweite Teillichtleiter mehrere voneinander entkoppelte Teilbereiche umfasst, die jeweils mit verschiedenfarbigen Leuchtmitteln gekoppelt sind.

14. Anzeigevorrichtung nach einem der Ansprüche 1 bis 13, bei der zwischen dem Feld (8) und dem Teil des Lichtleiters (11), der das Feld (8) hinterleuchtet, ein Farbfilter (31) angeordnet ist.

15. Anzeigevorrichtung nach einem der Ansprüche 1 bis 14, bei der die Anzeige ein Flüssigkristallbildschirm (6) ist.

16. Fahrzeug mit einer Anzeigevorrichtung 6 nach einem der Ansprüche 1 bis 15.

## Claims

1. A display apparatus, comprising a monochromatic display (6) having a display surface (15), a rear side opposite of the display surface (15) and side edges, and a backlight which is provided for backlighting the display (6) and comprises a light conductor (10, 52) which is arranged on the rear side of the display (6) and extends over at least one of the side edges of the display (6) and partly overlaps the display surface (15) of the display (6) and lighting means (9, 35, 49, 50) which inject light into the light conductor (10, 52), **characterized by** a field (8) which is arranged on a portion of the light conductor (11, 48, 53) which extends over the display surface (15) of the display (6) and is backlit by said portion of the light conductor (11, 48, 53).

2. A display apparatus according to claim 1, comprising a housing (3, 41) on which the lighting means (9, 35, 49, 50) are arranged and to which the light conductor (10, 52) is fastened.

3. A display apparatus according to claim 2, wherein the housing (3, 41) comprises a light reflector.

4. A display apparatus according to one of the claims 1 to 3, wherein the light conductor (10, 52) extends over all side edges of the display (6) and overlaps the display surface (15) in the region of the side edges.

5. A display apparatus according to one of the claims 1 to 4, wherein the portion of the light conductor (11, 48, 53) partly overlapping the display surface (15) is arranged in an annular way.

6. A display apparatus according to one of the claims 1 to 5, wherein the field is a clock face (8).

7. A display apparatus according to one of the claims 1 to 6, wherein the light conductor (52) comprise a slit (13) through which the display (6) can be inserted into the light conductor (10, 52).

8. A display apparatus according to one of the claims 1 to 7, wherein the light conductor (10) is made in one piece.

9. A display apparatus according to one of the claims 1 to 7, wherein the light conductor (52) comprises a first partial light conductor (47, 54) which is arranged on the rear side of the display (6) and a second partial light conductor (48, 53) extending over the side edge and partly overlapping the display surface of the display.

10. A display apparatus according to claim 9, wherein the two partial light conductors (47, 48, 53, 54) are decoupled from each other and the lighting means comprise first lighting means which are coupled with the first partial light conductor (47, 54) and the second lighting means which are coupled with the second partial light conductor (48, 53).

11. A display apparatus according to claim 10, wherein the two partial light conductors (53, 54) are decoupled from one another by a light-deflecting and/or light-reflecting thin layer.

12. A display apparatus according to claim 10, wherein the housing (41) comprises separating walls (44) for decoupling the two partial light conductors (47, 48).

13. A display apparatus according to one of the claims 10 to 12, wherein the second partial light conductors comprise several sections which are decoupled from one another and which are each coupled with lighting means of different colors.

14. A display apparatus according to one of the claims 1 to 13, wherein a color filter (31) is arranged between the field (8) and the part of the light conductor (11) which backlights the field (8).

15. A display apparatus according to one of the claims 1 to 14, wherein the display is a liquid crystal display (6).

16. A vehicle with a display apparatus 6 according to one of the claims 1 to 15.

## Revendications

1. Dispositif d'affichage comprenant un afficheur monochrome (6) possédant une surface d'affichage (15), une face arrière opposée à la surface d'affichage (15) et des bords latéraux, et un éclairage d'arrière-plan prévu pour le rétro-éclairage de l'afficheur (6), qui comprend un guide d'ondes lumineuses (10, 52) disposé sur la face arrière de l'afficheur (6), s'étendant sur au moins un des bords latéraux de l'afficheur (6) et recouvrant partiellement la surface d'affichage (15) de l'afficheur (6), et des lampes (9, 35, 49, 50) introduisant de la lumière dans le guide d'ondes lumineuses (10, 52),
**caractérisé en ce qu'**il comprend un champ (8) disposé sur la partie du guide d'ondes lumineuses (11, 48, 53) qui s'étend par-dessus la surface d'affichage (15) de l'afficheur (6), qui est éclairé par l'arrière par cette partie du guide d'ondes lumineuses (11, 48, 53).

2. Dispositif d'affichage selon la revendication 1, présentant un boîtier (3, 41) dans lequel les lampes (9, 35, 49, 50) sont disposées et sur lequel le guide d'ondes lumineuses (10, 52) est fixé.

3. Dispositif d'affichage selon la revendication 2, dans lequel le boîtier (3, 41) présente un réflecteur de lumière.

4. Dispositif d'affichage selon l'une des revendications 1 à 3, dans lequel le guide d'ondes lumineuses (10, 52) s'étend sur tous les bords latéraux de l'afficheur (6) et recouvre la surface d'affichage (15) au niveau des bords latéraux.

5. Dispositif d'affichage selon l'une des revendications 1 à 4, dans lequel la partie du guide d'ondes lumineuses (11, 48, 53) recouvrant partiellement la surface d'affichage (15) a une forme annulaire.

6. Dispositif d'affichage selon l'une des revendications 1 à 5, dans lequel le champ est un cadran (8).

7. Dispositif d'affichage selon l'une des revendications 1 à 6, dans lequel le guide d'ondes lumineuses (52) présente une fente (13) à travers laquelle l'afficheur (6) peut être inséré dans le guide d'ondes lumineuses (10, 52).

8. Dispositif d'affichage selon l'une des revendications 1 à 7, dans lequel le guide d'ondes lumineuses (10) est fait d'une pièce.

9. Dispositif d'affichage selon l'une des revendications 1 à 7, dans lequel le guide d'ondes lumineuses (52) comprend un premier guide d'ondes lumineuses partiel (47, 54) disposé sur la face arrière de l'afficheur (6) et un deuxième guide d'ondes lumineuses partiel (48, 53) se repliant partiellement par-dessus le bord latéral et la surface d'affichage de l'afficheur.

10. Dispositif d'affichage selon la revendication 9, dans lequel les deux guides d'ondes lumineuses partiels (47, 48, 53, 54) sont découplés l'un de l'autre et les lampes comprennent des premières lampes couplées au premier guide d'ondes lumineuses partiel (47, 54) et des deuxièmes lampes couplées au deuxième guide d'ondes lumineuses partiel (48, 53).

11. Dispositif d'affichage selon la revendication 10, dans lequel les deux guides d'ondes lumineuses partiels (53, 54) sont découplés l'un de l'autre par une couche mince repoussant la lumière et/ou réfléchissant la lumière.

12. Dispositif d'affichage selon la revendication 10, dans lequel le boîtier (41) comprend des cloisons de séparation (44) pour découpler les deux guides d'ondes lumineuses partiels (47,48).

13. Dispositif d'affichage selon l'une des revendications 10 à 12, dans lequel le deuxième guide d'ondes lumineuses partiel comprend plusieurs sous-parties découplées les unes des autres, qui sont couplées chacune à des lampes de couleurs différentes.

14. Dispositif d'affichage selon l'une des revendications 1 à 13, dans lequel un filtre coloré (31) est disposé entre le champ (8) et la partie du guide d'ondes lumineuses (11) qui éclaire le champ (8) par l'arrière.

15. Dispositif d'affichage selon l'une des revendications 1 à 14, dans lequel l'afficheur est un écran à cristaux liquides (6).

16. Véhicule avec un dispositif d'affichage 6 selon l'une des revendications 1 à 15.
